# EUROPÄISCHE PATENTSCHRIFT

(11) **EP 3 326 502 B1**
(45) Veröffentlichungstag und Bekanntmachung des Hinweises auf die Patenterteilung: **23.10.2019**
(21) Anmeldenummer: 18153979.2
(22) Anmeldetag: 29.01.2018
(51) Int. Cl.: A47J 36/06

(54) **DECKEL FÜR EIN KOCHGEFÄSS**
COVER FOR A COOKING VESSEL
COUVERCLE POUR UN RÉCIPIENT DE CUISSON

(30) Priorität: 30.01.2017 AT 500652017
(43) Veröffentlichungstag der Anmeldung: 30.05.2018
(73) Patentinhaber: Kochhut GmbH, 4232 Hagenberg (AT)
(72) Erfinder: Datl, Karl, 4232 Hagenberg (AT)
(74) Vertreter: Hadeyer, Christian

(56) Entgegenhaltungen:
- EP-A1- 2 923 619
- GB-A- 2 489 392
- US-A- 710 681
- US-A- 1 997 509
- US-A1- 2004 079 755

## Beschreibung

Die Erfindung bezieht sich auf einen Deckel für ein Kochgefäß mit einem als Rotationskörper ausgebildeten, eine sich über einen Umfangsabschnitt erstreckende Dampfabzugsöffnung aufweisenden Deckelkörper und mit einem um die Rotationsachse des Deckelkörpers drehbar gelagerten Drehschieber zum Verschließen der Dampfabzugsöffnung.

Unter Kochgefäß sind insbesondere Kochtöpfe und Pfannen, wie beispielsweise Bratpfannen zu verstehen.

Um Dampf aus einem Kochgefäß entweichen zu lassen, ist es bekannt, den Deckel für das Kochgefäß entlang einer zur Deckelachse parallelen Ebene zu teilen und die beiden Deckelteile durch ein Scharnier miteinander zu verbinden, sodass bei aufgesetztem Deckel der eine Deckelteil vom Kochgefäß hoch geschwenkt werden kann. Abgesehen davon, dass der hochgeschwenkte Deckelteil zusätzlichen Platz benötigt, wird die Stabilität der Deckelabstützung auf dem Kochgefäß durch den hochgeschwenkten Deckelteil beeinträchtigt. Zur Vermeidung dieser Mängel wurde bereits vorgeschlagen (DE 10 2011 006 958 A1), in der Deckenwand des in seiner Grundform einen Rotationskörper bildenden Deckels eine sich beispielsweise über ein Viertel des Umfangs erstreckende Dampfabzugsöffnung und auf der Deckelinnenseite einen Drehschieber vorzusehen, der um die Rotationsachse drehbar im Deckel gelagert ist und mit Hilfe eines eine Deckelhandhabe bildenden Drehknopfs zwischen verschiedenen Drehstellungen verdreht werden kann, in denen die Dampfabzugsöffnung verschlossen, vollständig offen oder mit einem Sieb versehen ist. Nachteilig ist allerdings, dass die Zugriffsmöglichkeiten zum Kochgut durch die Dampfabzugsöffnung beschränkt sind, sodass hierfür der Deckel regelmäßig vom Kochgefäß abgehoben werden muss. Außerdem ist die Reinigung des Deckels problematisch, weil wegen der geforderten Dampfdichtheit zwischen dem Deckel und dem Drehschieber lediglich ein geringfügiges Bewegungsspiel vorhanden sein darf.

Die EP2641518A1 zeigt einen flachen Deckel als Spritzschutz für Bratpfannen. Das Ausmaß, mit welchem Dampf abgeleitet wird, kann durch Höhenverstellung eines beweglichen Elements bezüglich des Grundelements des Deckels eingestellt werden und ggf. zusätzlich durch Drehung des Elements. Eine gezielte einseitige, seitliche Ableitung des Dampfes scheint nicht möglich, zudem ist das Kochgut in der Pfanne durch die Öffnungen des Deckels hindurch nur eingeschränkt zugänglich.

Die US 2004079755 A1 zeigt einen flachen Deckel, welcher drei Segmente mit unterschiedlichen Funktionen aufweist. Die flache kreissegmentförmige Öffnung, welche für die Handhabung des Kochguts vorgesehen ist, ermöglicht keine gute Erreichbarkeit des gesamten Gefäßbodens, insbesondere nicht bei flachen Pfannen.

Die US 1997509 A zeigt einen flachen Deckel mit einer perforierten Zone, eine Handhabung des Kochgutes durch den Deckel hindurch ist nicht möglich.

Die US 947025 A zeigt einen flachen Deckel, welcher drei Segmente mit unterschiedlichen Funktionen aufweist. Die flache kreissegmentförmige Öffnung, welche für die Handhabung des Kochguts vorgesehen ist, ermöglicht keine gute Erreichbarkeit des gesamten Gefäßbodens, insbesondere nicht bei flachen Pfannen.

Die DE 202006016517 U zeigt einen flachen Deckel, welcher zwar eine relativ große Öffnung freigeben kann, aber durch die flache Form bei flachen Pfannen die Handhabung von Kochgut erschwert. Nachteilig ist zudem, dass der bewegbare Teil unter dem feststehenden Teil angebracht ist, sodass der Aufbau kompliziert ist und/oder keine 360° Beweglichkeit des bewegbaren Teils um den feststehenden Teil gegeben ist.

Die US 710681 A zeigt einen Kochtopfdeckel mit einer perforierten Zone, ohne Öffnung zur Handhabung des Kochgutes.

Die US 616883 A zeigt einen Kochtopfdeckel mit einer perforierten Zone, ohne Öffnung zur Handhabung des Kochgutes.

Die GB 2489392 A zeigt einen flachen Deckel, welcher zwar eine relativ große Öffnung freigeben kann, aber durch die flache Form bei flachen Pfannen die Handhabung von Kochgut erschwert. Nachteilig ist zudem, dass der bewegbare Teil unter dem feststehenden Teil angebracht ist.

Die DE 4026092 A1 beschreibt einen Spritzschutzdeckel für Pfannen mit einem keilförmigen Ausschnitt, wobei das ausgeschnittene Teil mit dem Deckelgriff um den Spritzschutzdeckel drehbar ist. Das ausgeschnittene Teil befindet sich unter dem Deckel.

Nachteilig an verdrehbaren, durch eine Steckverbindung befestigten Drehschiebern unterhalb des Deckelkörpers ist, dass diese in das Kochgefäß fallen würden, wenn sich die Steckverbindung löst.

Nachteilig an flachen Deckeln ist, dass diese den Dampf hauptsächlich nach oben entweichen lassen und die Handhabung des Kochgutes erschweren. Der nach oben entweichende Dampf kann die Erreichbarkeit bzw. sichere Handhabung von Griffen und Bedienelementen auf der Deckeloberfläche erschweren.

Der Erfindung liegt somit die Aufgabe zugrunde, einen Deckel für ein Kochgefäß mit einer Dampfabzugsöffnung so auszugestalten, dass einfache konstruktive Voraussetzungen für eine ausreichend große Dampfabzugsöffnung geschaffen werden, um zur Behandlung des Kochguts im Kochgefäß den Deckel nicht abnehmen zu müssen und wobei der Dampf seitlich aus dem Deckel gelangen kann, um den Abzug durch einen Muldenlüfter oder andere seitlich neben dem Kochgefäß vorliegende Abzüge zu unterstützen.

Die Aufgabe wird mit einem Deckel gemäß Anspruch 1 gelöst.

Ausgehend von einem Deckel der eingangs geschilderten Art löst die Erfindung die gestellte Aufgabe dadurch, dass der den Deckelkörper mit Bewegungsspiel außen umschließende Drehschieber auf einer umlaufenden ringförmigen Gleitfläche des Deckelkörpers aufruht, wobei der Deckelkörper ausgehend von der Gleitfläche eine hochgezogene, steile Umfangswand aufweist, welche in eine obere flache Deckenwand übergeht, wobei auch der Drehschieber eine hochgezogene, steile Umfangswand aufweist, welche in eine obere flache Deckenwand übergeht und wobei im Deckelkörper und im Drehschieber je eine Öffnungsfläche vorliegt, welche sich über je einen Teil der Umfangswand und Deckenwand des jeweiligen Körpers erstreckt, wobei sich die Öffnungsfläche an ihrer größten Ausdehnung jeweils um einen Umfangsbereich von mindestens 110° erstrecken und wobei der geschlossene Umfangsbereich des Drehschiebers größer ist, als der Umfangsbereich, welcher von der Öffnungsfläche im Deckelkörper eingenommen wird, sodass der Drehschieber die Öffnungsfläche des Deckelkörpers vollständig verschließen kann und dabei den Deckelkörpers beidseits seiner Öffnungsfläche außen überlappt.

Dadurch dass sich die Öffnungsflächen über einen großen Umfangsbereich erstrecken und sowohl die Umfangswände als auch die Deckenwand schneiden, ergibt sich vorteilhaft eine gute Zugänglichkeit des Inneren des Kochgefäßes, da die Öffnung nicht nur ausreichend breit sondern insbesondere auch ausreichend hoch ist. Zudem wird erreicht, dass Dampf durch den Anteil der Öffnung, welcher in den Seitenwänden vorliegt, besonders gut seitlich abgesogen werden kann. Da der Drehschieber außen auf einer umlaufenden ringförmigen Gleitfläche des Deckelkörpers aufruht, ist dieser vorteilhaft in jeder Winkelstellung am gesamten Umfang abgestützt, sodass der Drehschieber mit geringem Kraftaufwand bewegt werden kann. Zudem wird erreicht, dass der Drehschieber einfach auf den Deckelkörper aufgelegt bzw. aufgesteckt werden kann und damit einfach vom Deckelkörper abgehoben werden kann und nicht zentral mit dem Deckelkörper mit einer aufwändiger trennbaren Verbindung, wie beispielsweise einer Schraubenverbindung verbunden werden muss.

Bevorzugt ist vorgesehen, dass der den Deckelkörper mit Bewegungsspiel außen umschließende Drehschieber auf einer umlaufenden Gleitfläche des Deckelkörpers aufruht und dass von den beiden durch den Deckelkörper und den Drehschieber gebildeten Deckelteilen einer einen Achsstummel und der andere eine Steckaufnahme für den Achsstummel aufweisen.

Da der Drehschieber einerseits auf einer umlaufenden Gleitfläche des Deckelkörpers aufruht und andererseits durch einen in eine Steckaufnahme eingreifenden, zur Rotationsachse koaxialen Achsstummel gegenüber dem Deckelkörper zentrisch geführt wird, kann der Drehschieber in axialer Richtung vom Deckelkörper abgezogen werden, was eine einfache Reinigung sowohl des Deckelkörpers als auch des Drehschiebers ermöglicht. Trotzdem wird die erforderliche Dampfdichtheit des Deckels bei geschlossenem Drehschieber sichergestellt, weil der Drehschieber den Deckelkörper unter Freihaltung lediglich eines Bewegungsspiels umschließt und sich dichtend an die umlaufende Gleitfläche anlegt. Bedingt durch das Bewegungsspiel zwischen dem Deckelkörper und dem Drehschieber ergibt sich eine Spaltdichtung, die den Dichtungsanforderungen eines drucklosen Kochgefäßes ohne weiteres genügt. Der den Deckelkörper außen umschließende Drehschieber schafft einfache konstruktive Voraussetzungen für eine ausreichend große Dampfabzugsöffnung, um durch die Dampfabzugsöffnung das Kochgut handhaben zu können. Aufgrund des an der umlaufenden Gleitfläche abgestützten Drehschiebers kann die Dampfabzugsöffnung durch die umlaufende Gleitfläche begrenzt werden, sodass ein sich über die gesamte Deckelhöhe erstreckender Durchtritt zur Handhabung des Kochguts genützt werden kann.

In diesem Zusammenhang ergibt sich eine vorteilhafte Konstruktion, wenn der Deckelkörper und der Drehschieber jeweils eine Deckenwand und eine Umfangswand umfassen. Die Umfangswand bestimmt die Höhe des Deckels und damit zum Teil die Größe des durch die Dampfabzugsöffnung gebildeten Durchtritts zum Kochgefäß. Eine maximale Dampfabzugsöffnung wird dadurch erreicht, dass in der Schließstellung des Drehschiebers die Decken- und Umfangswände des Deckelkörpers und des Drehschiebers einander beidseits einer Durchmesserebene überlappen. In diesem Fall ergibt sich eine Dampfabzugsöffnung, die sich annähernd über den halben Deckelumfang erstreckt.

Um einen in sich stabilen Deckelkörper zu erhalten, kann der Deckelkörper mit einem nach außen abstehenden, die Gleitfläche für den Drehschieber bildenden Ringflansch versehen sein, der die stirnseitigen Enden der Umfangswand des Deckelkörpers miteinander verbindet. Dieser in sich geschlossene Ringflansch kann zur Auflage des Deckelkörpers auf dem Rand des Kochgefäßes genützt werden, wobei zur radialen Sicherung des Deckelkörpers gegenüber dem Kochgefäß am Ringflansch ein Zentrieransatz vorgesehen werden kann, der vorzugsweise in die Gefäßöffnung ragt.

In der Zeichnung ist der Erfindungsgegenstand beispielsweise dargestellt.

Es zeigen
Fig. 1 einen ersten erfindungsgemäßen Deckel für ein Kochgefäß in einer Draufsicht bei zum Teil geöffneter Dampfabzugsöffnung,
Fig. 2 einen Schnitt nach der Linie II - II der Fig.1,
Fig. 3 eine zum Teil aufgerissene Draufsicht auf den Deckel der Fig. 1, jedoch bei geschlossener Dampfabzugsöffnung,
Fig. 4 eine besonders bevorzugte Ausführungsvariante eines erfindungsgemäßen Deckels in seitlicher Schnittansicht mit abgehobenem Drehschieber,
Fig. 5 die besonders bevorzugte Ausführungsvariante des erfindungsgemäßen Deckels in seitlicher Schnittansicht mit verriegeltem Drehschieber,
Fig. 6 die besonders bevorzugte Ausführungsvariante des erfindungsgemäßen Deckels in seitlicher Schnittansicht mit entriegeltem Drehschieber und mit Ringadapter,
Fig. 7 die besonders bevorzugte Ausführungsvariante des erfindungsgemäßen Deckels in Ansicht von vorne mit verriegeltem Drehschieber,
Fig. 8 die besonders bevorzugte Ausführungsvariante des erfindungsgemäßen Deckels in Ansicht von oben mit verriegeltem Drehschieber,
Fig. 9 die besonders bevorzugte Ausführungsvariante des erfindungsgemäßen Ringadapters,
Fig. 10 die besonders bevorzugte Ausführungsvariante des erfindungsgemäßen Deckelkörpers,
Fig. 11 die besonders bevorzugte Ausführungsvariante des erfindungsgemäßen Drehschiebers.

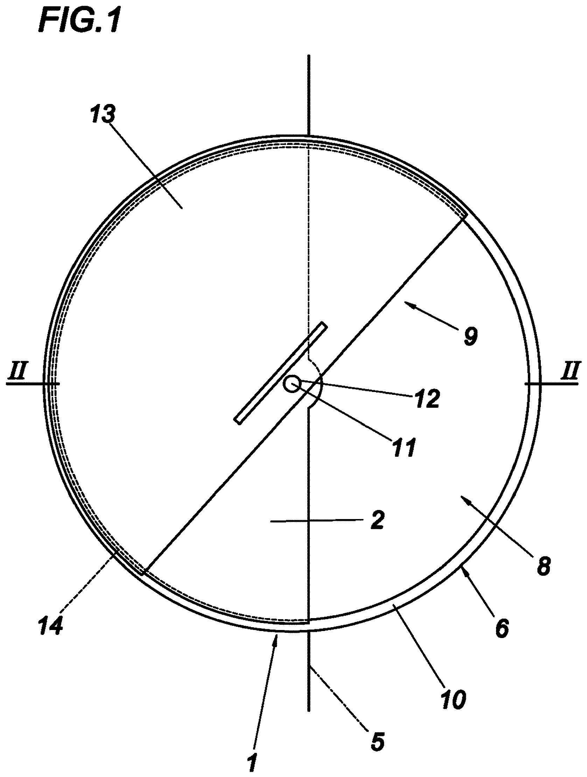

Der Deckel gemäß dem dargestellten Ausführungsbeispiel der Fig. 1-3 weist einen Deckelkörper 1 auf, der eine Deckenwand 2 und eine Umfangswand 3 umfasst. Die Deckenwand 2 und die Umfangswand 3 bilden Umfangsabschnitte eines Rotationskörpers, dessen Rotationsachse mit 4 bezeichnet ist. Die Anordnung ist dabei so getroffen, dass die Stirnflächen der sich etwas mehr als um den halben Deckelumfang erstreckenden Wände 2, 3 in einer gemeinsamen zur Rotationsachse 4 parallelen Ebene 5 liegen. Im unteren Randbereich ist der Deckelkörper 1 mit einem radial nach außen abstehenden, umfangsgeschlossenen Ringflansch 6 versehen, der einen Zentrieransatz 7 ausbildet. Der Deckelkörper 1 stützt sich beim Aufsetzen auf ein Kochgefäß mit dem Ringflansch 6 auf dem Öffnungsrand des Kochgefäßes ab und wird mithilfe des in den Öffnungsrand eingreifenden Zentrieransatzes 7 gegenüber dem Kochgefäß verschiebefest gehalten.

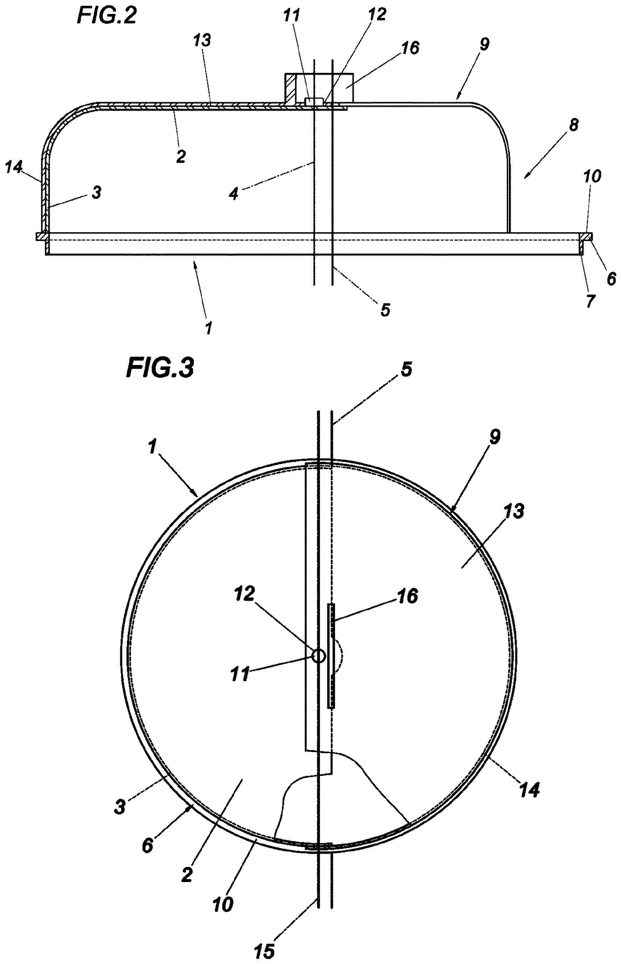

Die in der Ebene 5 liegenden Stirnflächen der Decken- und Umfangswände 2, 3 begrenzen zusammen mit dem Ringflansch 6 eine Dampfabzugsöffnung 8, die sich annähernd um den halben Umfang des Deckelkörpers 1 erstreckt und folglich einen ausreichenden Durchtritt für die Kochguthandhabung sicherstellt. Zum Schließen dieser Dampfabzugsöffnung 8 ist ein Drehschieber 9 vorgesehen, der den Deckelkörper 1 mit Bewegungsspiel außen umschließt und mit seinem unteren Rand auf einer durch den Ringflansch 6 gebildeten, umlaufenden Gleitfläche 10 ruht. Zur Führung des Drehschiebers 9 weist der Deckelkörper 1 im Bereich seiner Deckenwand 2 einen zur Rotationsachse 4 koaxialen Achsstummel 11 auf, der in eine als Lagerauge dienende Steckaufnahme 12 des Drehschieber 9 eingreift, wie dies insbesondere der Fig. 2 entnommen werden kann. Der Drehschieber 9 umfasst wie der Deckelkörper 1 eine Deckenwand 13 sowie eine Umfangswand 14, wobei sich die Deckenwände 2, 13 und die Umfangswände 3, 14 des Deckelkörpers 1 und des Drehschiebers 9 in der Schließstellung des Drehschiebers 9 überlappen, um die Dampfdichtheit des Deckels zu gewährleisten. Das Bewegungsspiel zwischen den Deckenwänden 2, 13 und den Umfangswänden 3, 14 des Deckelkörpers 1 und des Drehschiebers 9 ergibt im Überlappungsbereich einen Dichtspalt, der in Verbindung mit der dichten Auflage des Drehschiebers 9 auf der Gleitfläche 10 des Ringflansches 6 eine ausreichend dichte Abdeckung der Dampfabzugsöffnung 8 des Deckels für ein druckloses Kochgefäß durch den Drehschieber 9 sicherstellt.

Wie der Fig. 3 entnommen werden kann, überlappen die Decken- und Umfangswände 2, 3 und 13, 14 des Deckelkörpers 1 und des Drehschiebers 9 einander in der Schließstellung des Drehschiebers 9 beidseits einer Durchmesserebene 15, was eine Dampfabzugsöffnung 9 ermöglicht, die in einer axialen Projektion lediglich um die halbe Überlappungsbreite von Deckelkörper 1 und Drehschieber 9 kleiner als der halbe Deckelkörper 1 ist.

Der Drehschieber 9 kann mithilfe einer Griffleiste 16 zwischen der Schließstellung nach der Fig. 3 und der um 180°gedrehten Offenstellung stufenlos verstellt werden, um die Öffnungsweite der Dampfabzugsöffnung 8 an die jeweiligen Anforderungen anpassen zu können. Mit der Drehung des Deckelkörpers 1 auf einem Kochgefäß kann die jeweils hinsichtlich ihrer Öffnungsweite eingestellte Dampfabzugsöffnung 8 gegenüber einem im Bereich des Kochfelds vorgesehenen Dunstabzug ausgerichtet werden.

Bei der Ausführungsvariante der Fig. 1-3 sind die Dampfabzugsöffnung 8 und die Öffnung des Drehschiebers 9 von oben gesehen exakt kreissegmentförmig ausgebildet bzw. dargestellt.

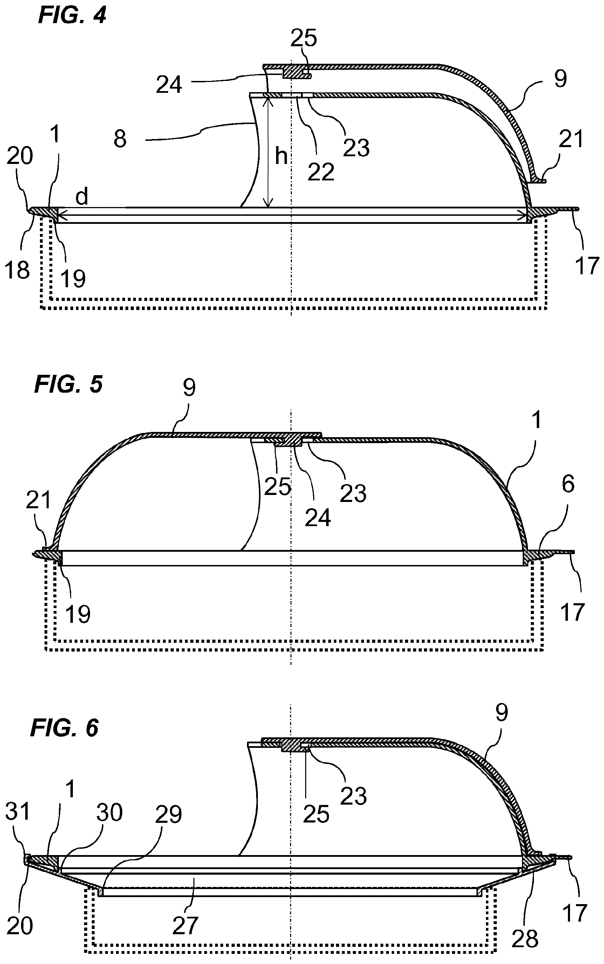

In den Fig. 4-11 ist eine besonders bevorzugte Ausführungsvariante des erfindungsgemäßen Deckels dargestellt.

Bevorzugt weist der Deckelkörper 1 zumindest einen Deckelgriff 17 auf, welcher sich bevorzugt 180° versetzt zum Zentrum der Dampfabzugsöffnung 8 am Ringflansch 6 befindet und bevorzugt als eine radiale Verbreiterung des Ringflansches 6 vorliegt. Mithilfe des Deckelgriffs 17 kann der Deckelkörper 1 am Kochgefäß 33 gedreht werden. Dadurch dass der Deckelgriff 17 radial vom Deckelkörper 1 abragt und dessen Gleitfläche 10 nicht überragt, wird durch diesen die Handhabung und Bewegungsfreiheit des Drehschiebers 9 nicht beeinträchtigt, sodass der Drehschieber 9 360° bzw. beliebig weit und oft um den Deckelkörper 1 gedreht werden kann.

Der Ringflansch 6 weist an seiner unteren Seite, welche bei Verwendung dem Kochgefäß 33 zugewandt liegt, eine Zentrierkegelfläche 18 auf, welche bestimmungsgemäß am oberen Rand des Kochgefäßes 33 aufliegt. Durch das Eigengewicht zentriert sich der erfindungsgemäße Deckel am Kochgefäß 33. Innen schließt an die Zentrierkegelfläche 18 ein Innensteg 19 an, welcher die Zentrierkegelfläche 18 nach unten hin überragt. Der Innensteg 19 verhindert, dass der Deckel seitlich vom Kochgefäß 33 rutschen kann und dient als Abtropfkante, sodass abrinnender Beschlag in das Kochgefäß 33 gelangt.

Am Außenrand weist der Ringflansch 6 bevorzugt einen Rastvorsprung 20 auf, welcher durch eine ringförmige Verjüngung des oberen Außenrandes des Ringflansches 6 gebildet sein kann.

Der Drehschieber 9 weist bevorzugt an seinem äußeren, unteren Umfangsbereich, also außen, unten an dessen Umfangswand 14 anschließend, einen Gleitflansch 21 auf, mit dessen unterer Fläche er oben auf der Gleitfläche 10 des Deckelkörpers 1 aufliegt.

Der Gleitflansch 21 verläuft bevorzugt über den gesamten unteren Rand der Umfangswand 14, oder zumindest über wenigstens einen Teilabschnitt dieser.

Weniger bevorzugt kann der Gleitflansch 21 ringförmig ausgeführt sein, sodass dieser über den gesamten Umfang auf der Gleitfläche 10 aufliegt.

Bevorzugt ist durch die Öffnungsfläche des Drehschiebers 9 dessen Umfangswand 14 über einen Teilbereich deren Umfang vollständig entfernt, sodass zwischen dessen Deckenwand 13 und dessen unterer Öffnung, welche dem Kochgefäß 33 zugewandt liegt, kein Material vorliegt. Anders ausgedrückt geht die Öffnungsfläche des Drehschiebers 9 bevorzugt in dessen untere Öffnung über. Bevorzugt weist die Ebene der Öffnungsfläche des Drehschiebers 9 einen Winkel von 90° zur Ebene der unteren Öffnung des Drehschiebers 9 auf. Bei Verwendung am Kochgefäß 33 ist die Ebene der unteren Öffnung horizontal ausgerichtet und die Ebene der Öffnungsfläche des Drehschiebers 9 zumindest im Wesentlichen vertikal. Die Umfangswand 14 und die Deckenwand 13 des Drehschiebers 9 bilden somit einen von oben gesehen im Wesentlichen kreissegmentförmigen Körper, dessen Segmenthöhe größer ist als dessen Radius.

Bevorzugt erstreckt sich die Dampfabzugsöffnung 8 direkt vom Ringflansch 6 bzw. der Gleitfläche 10 weg, sodass zwischen der unteren Seite der Dampfabzugsöffnung 8 und dem Ringflansch 6 keine Umfangswand 3 vorliegt. Die Dampfabzugsöffnung 8 ist durch den Ringflansch 6 von der unteren Öffnung des Deckelkörpers 1, welche dem Kochgefäß 33 zugewandt ist, bzw. parallel zur Öffnung des Kochgefäßes 33 vorliegt, getrennt. Das Innere des Kochgefäßes 33 ist somit im vorderen Bereich durch die horizontale untere Öffnung des Deckelkörpers 1 erreichbar und im hinteren Bereich durch die vertikale Öffnungsfläche der Deckenwand 2 und Seitenwand 3 und die untere Öffnung des Deckelkörpers 1 erreichbar. Die Umfangswand 3 und die Deckenwand 2 des Deckelkörpers 1 bilden einen von oben gesehen im Wesentlichen kreissegmentförmigen Körper, dessen Segmenthöhe größer ist als dessen Radius, wobei die Umfangswand 3 an ihrem unteren Ende mit einem Teilbereich des ringförmigen Ringflansches 6 verbunden ist.

Bevorzugt sind der Drehschieber 9 und der Deckelkörper 1 über eine selbstverriegelnde Steckverbindung verbunden. Bevorzugt erlaubt diese selbstverriegelnde Steckverbindung das Abheben des Drehschiebers 9 vom Deckelkörper 1 in nur einer Drehstellung des Drehschieber 9 am Deckelkörper 1, besonders bevorzugt in jener Stellung in welcher die Öffnungsfläche des Drehschiebers 9 und die Dampfabzugsöffnung 8 des Deckelkörpers 1 parallel zueinander ausgerichtet sind, bevorzugt bei vollständig geöffneter Dampfabzugsöffnung 8.

Diese selbstverriegelnde Steckverbindung kann realisiert werde, indem eine Deckenwand 2, 13 mit einer Öffnung mit zumindest einem exzentrischen Abschnitt versehen ist und die andere Deckenwand 2, 13 mit einem Verriegelungszapfen 24 versehen ist, dessen Kopf dieselbe Form wie die Öffnung aufweist und welcher durch die Öffnung steckbar ist.

Bevorzugt weist der Deckelkörper 1 in seiner Deckenwand 2 eine Öffnung in Form eines Zapfenlochs 22 auf, welches zumindest einen exzentrischen Abschnitt 23 aufweist, bevorzugt exakt einen exzentrischen Abschnitt 23 aufweist. Bevorzugt ist das Zapfenloch 22 durch ein Rundloch gebildet, an welches an einer Seite ein exzentrischer Abschnitt 23 in Form eines Langlochs mit geringerem Durchmesser anschließt. Bevorzugt liegt das Langloch an der der Dampfabzugsöffnung 8 abgewandt liegenden Seite des Rundlochs.

Bevorzugt weist der Drehschieber 9 an der Unterseite seiner Deckenwand 13 ein Verbindungselement in Form eines Verriegelungszapfens 24 auf, welcher zumindest einen Exzentervorsprung 25 aufweist, bevorzugt exakt einen Exzentervorsprung 25 aufweist. Bevorzugt ist der Verriegelungszapfen 24 durch einen Achsstummel 11 gebildet, an welchen an einer Seite ein Exzentervorsprung 25 in Form eines längsovalen Vorsprungs mit geringerer Dicke anschließt. Der Exzentervorsprung 25 weist einen Abstand zur Unterseite der Deckenwand 13 des Drehschiebers 9 auf, welcher größer oder gleich der Dicke der Deckenwand 2 des Deckelkörpers 1 ist. Bevorzugt liegt der Exzentervorsprung 25 an der der Öffnungsfläche des Drehschiebers 9 abgewandt liegenden Seite des Achsstummels 11.

Der Drehschieber 9 ist um den Achsstummel 11 der Steckverbindung frei drehbar. Der Exzentervorsprung 25 am unteren Ende des Achsstummels 11 sorgt für die Selbstverriegelung, nach Verdrehen der Steckverbindung.

In Fig. 4 ist der Drehschieber 9 oberhalb des Deckelkörpers 1 dargestellt, sodass die Elemente der selbstverriegelnden Steckverbindung gut sichtbar sind.

Wie in Fig. 4 und 6 zu erkennen ist, kann der Drehschieber 9 in jener Ausrichtung, in welcher die Dampfabzugsöffnung 8 vollständig geöffnet ist, am Deckelkörper 1 platziert oder von diesem abgehoben werden. Wie in den Fig. 5, 7, 8 zu erkennen ist, kommt der Exzentervorsprung 25 mit der Deckenwand 2 in Eingriff sobald der Drehschieber 9 am Deckelkörper 1 verdreht wird. Dadurch kann der Drehschieber 9 vorteilhaft mitsamt dem Deckelkörper 1 vom Kochgefäß 33 abgehoben bzw. auf diesem platziert werden.

Weniger bevorzugt können zwei beispielsweise sich gegenüberliegende Exzentervorsprünge 25 und zwei sich gegenüberliegende exzentrische Abschnitte 23 vorhanden sein, sodass der Drehschieber 9 in zwei Drehstellungen von Deckelkörper abgehoben werden kann, beispielsweise, wenn die Öffnungsfläche des Drehschiebers 9 und die Dampfabzugsöffnung 8 des Deckelkörpers 1 einen Winkel von 90° zueinander einschließen.

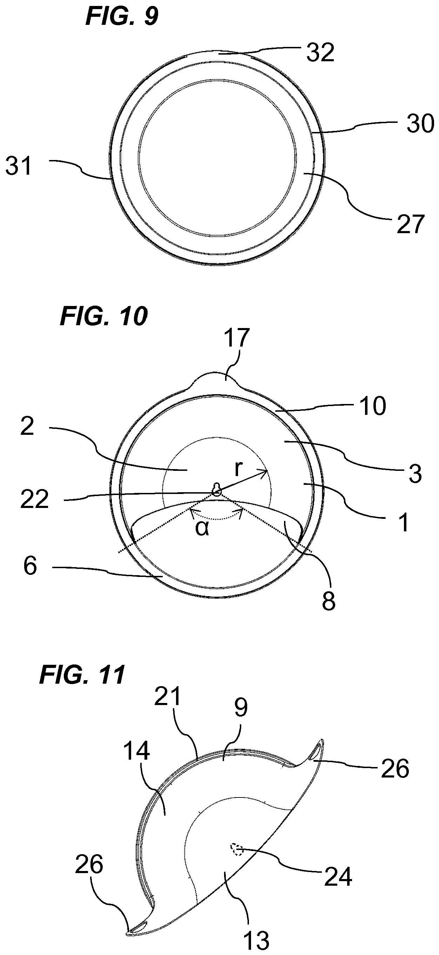

Wie in Fig. 10 dargestellt ist die Dampfabzugsöffnung 8 von oben gesehen gewölbt ausgeführt, wobei diese zentral einen geringeren Normalabstand zum Zentrum der Deckenwand 1 aufweist, als an ihren beiden Rändern.

Wie in Fig. 11 dargestellt ist die Öffnungsfläche des Drehschiebers 9 von oben gesehen gewölbt ausgeführt, wobei diese zentral einen größeren Normalabstand zum Zentrum der Deckenwand 13 aufweist, als an ihren beiden Rändern.

Bevorzugt weisen der obere Rand der Öffnungsfläche des Drehschiebers 9 und der Dampfabzugsöffnung 8 von oben gesehen jeweils einen symmetrischen geraden oder bogenförmigen insbesondere ellipsen- oder kreisbogenförmigen Verlauf auf.

Der erfindungsgemäße Deckel kann zudem einen Ringadapter 27 aufweisen, welcher dazu dient, um den Deckel auch auf Kochgefäßen 33 mit kleinerem Durchmesser aufzusetzen.

Bevorzugt ist der erfindungsgemäße Deckel für Kochgefäße 33 mit Durchmesser von ca. 28 cm vorgesehen, wobei mit dem Ringadapter 27 der erfindungsgemäße Deckel auch für Kochgefäße 33 von bis hinab zu bevorzugt 24 cm Durchmesser verwendbar ist.

Der Ringadapter 27 ist ein ringförmiger Rotationskörper, welcher eine flache Trichterform aufweist. An seiner Unterseite weist der Ringadapter 27 eine ringförmige Zentrierkegelfläche 28 auf, sodass sich der Ringadapter 27 durch das Gewicht des Deckels auf dem Kochgefäß 33 zentriert. Innen, unten an die Zentrierkegelfläche 28 anschließend folgt ein ringförmiger Innensteg 29, welcher von der Zentrierkegelfläche 28 nach unten hin vorragt. Der Innensteg 29 bewirkt, dass der Deckel mit dem Ringadapter 27 nicht seitlich vom Kochgefäß 33 rutschen kann.

An seiner oberen Seite weist der Ringadapter 27 einen ringförmigen Haltesteg 30 auf, welcher mit Abstand zum äußeren und inneren Rand des Ringadapter 27 vorliegt und von der oberen Fläche des trichterförmigen Rotationskörpers empor ragt. Am äußeren Rand weist der Ringadapter 27 einen weiteren ringförmigen Steg auf, welcher von der oberen Fläche des trichterförmigen Rotationskörpers empor ragt. Dieser Steg ist bevorzugt als Raststeg 31 ausgeführt, also als ein Steg, welcher am oberen Ende zumindest einen nach innen vorspringenden Bereich aufweist. Wie in Fig. 6 dargestellt ist, übergreift der nach innen vorspringenden Bereich des Raststegs 31 den äußeren Rand des Deckelkörpers 1 bzw. dessen Rastvorsprung 20, während der Innensteg 19 des Deckelkörpers 1 am Haltesteg 30 anliegt. Dadurch ist der Deckelkörper 1 am Ringadapter 27 gehalten bzw. gesichert, sodass alle Komponenten des Deckels gemeinsam abgehoben werden können.

Wie in Fig. 9 zu erkennen ist, weist der Raststeg 31 bevorzugt zumindest eine Unterbrechung 32 auf, bzw. anders formuliert, verläuft der Raststeg 31 bevorzugt nicht über den gesamten Umfang. Die Unterbrechung 32 ist so breit ausgeführt, dass der Deckelgriff 17 radial durch diese ragen kann.

Die Innenstege 19, 29 und der Haltesteg 30 verlaufen bevorzugt um den ganzen Umfang, jedoch könnten auch diese Unterbrechungen aufweisen, beispielsweise könnten diese zinnenartig ausgeführt sein.

Die Öffnungsfläche des Drehschiebers 9 und die Dampfabzugsöffnung 8 sind erfindungsgemäß so groß ausgeführt, dass durch diese hindurch eine komfortable Handhabung des Kochgutes im Kochgefäß 33 vorgenommen werden kann, sowohl bei hohen Kochgefäßen 33 wie Töpfen, als auch insbesondere bei flachen Kochgefäßen 33 wie Pfannen.

Bei der Dampfabzugsöffnung 8 handelt es sich daher vielmehr um eine Handhabungsöffnung, deren Hauptzweck die Zugänglichmachung des Kochgutes ist. Im (teil-)geschlossenen Zustand schützt der erfindungsgemäße Deckel vor Fettspritzern und im teilgeöffneten Zustand kann der austretende Dampf vorteilhaft gelenkt werden, beispielsweise zu einem Dunstabzug insbesondere einem Muldenlüfter oder einer Tischlüftung.

Die Höhe h der Dampfabzugsöffnung 8, also der Normalabstand zwischen der Unterseite der Deckenwand 2 und der Oberseite des Ringflansches 6 beträgt bevorzugt mindestens 5 cm, besonders bevorzugt mindestens 7 cm. Bevorzugt beträgt die Höhe h der Dampfabzugsöffnung 8 maximal 15 cm, besonders bevorzugt maximal 10 cm.

Insbesondere bevorzugt beträgt die Höhe h 7,5 cm.

Die Breite b der Dampfabzugsöffnung 8 an deren breitesten Stelle bevorzugt mindestens 20 cm, besonders bevorzugt mindestens 23 cm. Bevorzugt beträgt die Breite b der Dampfabzugsöffnung 8 maximal 30 cm, besonders bevorzugt maximal 27 cm.

Insbesondere bevorzugt beträgt die Breite b 25 cm.

Bevorzugt erstreckt sich die Dampfabzugsöffnung 8 an deren breitesten Stelle über einen Winkelbereich von zumindest 110° bevorzugt zumindest 120° insbesondere zumindest 130°. Bevorzugt erstreckt sich die Dampfabzugsöffnung 8 an deren breitesten Stelle über einen Winkelbereich, welcher größer ist als der Winkel α.

Bevorzugt beträgt der Radialabstand am Scheitelpunkt der Dampfabzugsöffnung 8 zum Zentrum des Rotationsachse 4 zwischen 1 und 3 cm.

Bevorzugt beträgt der Winkel α, welcher zwischen den beiden unteren Endpunkten der Dampfabzugsöffnung 8 bezüglich der Rotationsachse 4 eingeschlossen ist, mindesten 90°, bevorzugt mindestens 120° und maximal 180°, insbesondere maximal 170 °.

Bevorzugt beträgt der Radius r der flachen, horizontalen Deckenwand 2 mindesten 5 cm, insbesondere mindestens 7 cm. Insbesondere bevorzugt beträgt der Radius r 8 cm. Bevorzugt ist der Durchmesser (doppelter Radius) der Deckenwand größer als der halbe Innendurchmesser d des Ringflansches 6.

Bevorzugt beträgt der Winkel, der zwischen den beiden Punkten, an welchen die Dampfabzugsöffnung 8 den Umfang der Deckenwand 2 schneidet, bezüglich der Rotationsachse 4 eingeschlossen ist, mindesten 120° und maximal 180°.

Bevorzugt beträgt der Innendurchmesser d des Ringflansches 6 mindesten 25 cm und maximal 30 cm, insbesondere 27 cm.

Bevorzugt beträgt der Durchmesser der Umfangswand 3 am unteren Ende mindesten 25 cm und maximal 30 cm und ist bevorzugt gleich dem Innendurchmesser d des Ringflansches 6.

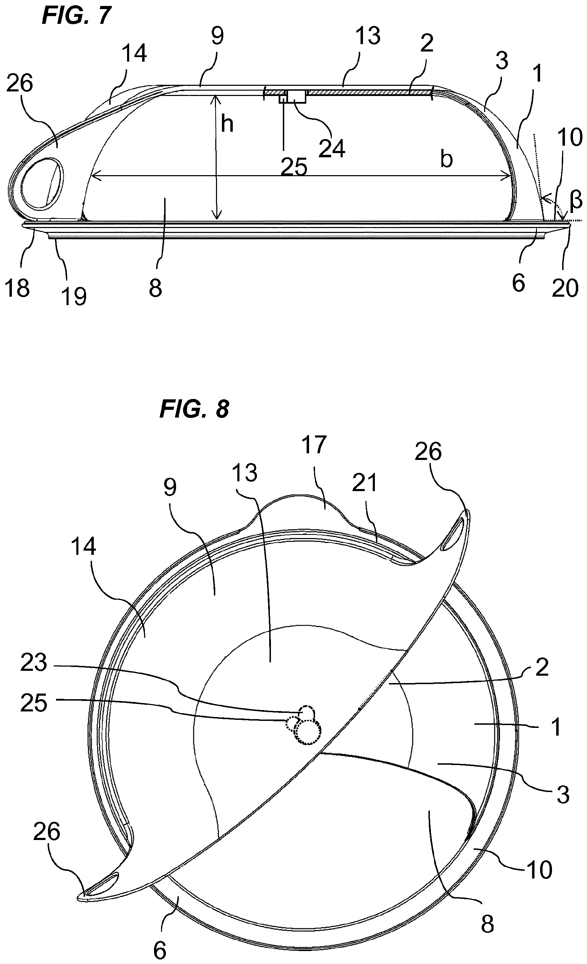

Die Umfangswand 3 ist bevorzugt bogenförmig geformt, wie in Fig. 7 zu erkennen ist, wobei diese vom Ringflansch steil ansteigt und zur Deckenwand 2 hin abflacht. Bevorzugt beträgt der Winkel β zwischen der Deckenwand und der Gleitfläche 10 mindestens 90 bis maximal 120°, besonders bevorzugt zwischen 95° und 100°.

Bevorzugt ist die Breite der Umfangswand 3, also der Radialabstand zwischen ihrem Ausgangspunkt am Ringflansch 6 und dem Umfang der Deckenwand 2 kleiner als ihre Höhe bzw. kleiner als die Höhe h der Dampfabzugsöffnung 8. Als Formel ausgedrückt gilt Höhe h > (Innendurchmesser d - 2 ^{∗} Radius r) / 2. Die mittlere Steigung der Umfangswand 3 beträgt bevorzugt mehr als 100%. Die mittlere Steigung der Deckenwand 2 ist kleiner als die mittlere Steigung der Umfangswand 3 und bevorzugt kleiner 100 % insbesondere 0.

Da der Drehschieber 9 außen an die kuppelförmige Erhebung des Deckelkörpers 1 anschließt, sind dessen Höhe und Durchmesser größer als jene der kuppelförmigen Erhebung.

Bevorzugt ist die Breite der Öffnungsfläche des Drehschiebers 9 breiter als jene der Dampfabzugsöffnung 8.

Bevorzugt ist die Höhe der Öffnungsfläche des Drehschiebers 9 höher als jene der Dampfabzugsöffnung 8.

Bevorzugt bestehen der Deckelkörper 1, der Drehschieber 9 und der Ringadapter 27 jeweils aus Kunststoff.

Bevorzugt sind der Deckelkörper 1, der Drehschieber 9 und der Ringadapter 27 jeweils ein monolithischer Kunststoffkörper.

Bevorzugt ist der Deckelkörper 1, der Drehschieber 9 und der Achsstummel 11 oder der Verriegelungszapfen 24 monolithisch mit einer der Deckenwände 2, 13 verbunden, bevorzugt mit der Deckenwand 13 des Drehschiebers 9.

Bevorzugt ist die obere Fläche der Deckenwand 2 plan ausgeführt, wobei keine Vorrichtungsteile von dieser nach oben ragen, insbesondere kein Griff, Knauf oder Griffleiste 16.

Bevorzugt weist der Drehschieber 9 zumindest einen Drehschiebergriff 26 auf, welcher sich von dessen Umfangswand 14 nach außen hin weg erstreckt. Bevorzugt sind zwei Drehschiebergriffe 26 vorhanden, welche beidseits der Öffnungsfläche des Drehschiebers 9 vorliegen. Bevorzugt sind die Drehschiebergriffe 26 Ausformungen der Umfangswand 14, welche dadurch gebildet sind, dass die Umfangswand 3 an ihren beiden der Öffnungsfläche zugewandten Enden nach außen, also in Radialrichtung weg von der Umfangswand 14, Verlängerungen aufweist. Bevorzugt weisen die Ausformungen jeweils eine Öffnung auf, um das Greifen der Ausformung zu erleichtern. In Fig. 11 ist der Aufbau des Drehschiebers 9 als kuppelförmige Halbschale mit den beiden seitlichen Drehschiebergriffen 26 und dem zentralen Verriegelungszapfen 24 in der flachen, horizontalen Deckenwand 13 besonders gut ersichtlich.

Seitlich an der steilen Umfangswand 14 angebrachte Drehschiebergriffe 26, welche nach außen abragen, haben den Vorteil, dass diese nicht direkt von aufsteigendem Dampf passiert werden, wie es der Fall bei einem Griff oder Knauf im Zentrum der Deckenwand 13 bzw. in der Rotationsachse 4 wäre. Zudem muss die Hand des Kochs nicht über den Inhalt des Kochgefäßes bewegt werden, um die seitlichen Drehschiebergriffe 26 zu erreichen, sodass die Gefahr Fettspritzer abzubekommen reduziert ist. Bei Vorhandensein von zwei Drehschiebergriffen 26 seitlich der Öffnungsfläche wird erreicht, dass zumindest einer von diesen immer gut erreichbar ist und dass zumindest immer einer von diesen so angeordnet ist, dass die Umfangswand 3 zwischen dem Inneren des Kochgefäßes 33 und dem Drehschiebergriff 26 liegt.

## Patentansprüche

1. Deckel, umfassend einen nach unten offenen Deckelkörper (1) und einen nach unten offenen Drehschieber (9), wobei der Deckelkörper (1) einen Ringflansch (6) mit einer umlaufenden ringförmigen Gleitfläche (10) aufweist und ausgehend von der Gleitfläche (10) eine hochgezogene, steile Umfangswand (3) aufweist, welche in eine obere flachere Deckenwand (2) übergeht, wobei auch der Drehschieber (9) eine hochgezogene, steile Umfangswand (14) aufweist, welche in eine obere flachere Deckenwand (13) übergeht und wobei der Drehschieber (9) außen am Deckelkörper (1) anliegt,
**dadurch gekennzeichnet, dass**
im Deckelkörper (1) und im Drehschieber (9) je eine Öffnungsfläche vorliegt, welche sich über je einen Teil der Umfangswand (3, 14) und Deckenwand (2, 13) des jeweiligen Körpers (1, 9) erstreckt, wobei sich die Öffnungsflächen an ihrer größten Ausdehnung jeweils um einen Umfangsbereich von mindestens 110° erstrecken und wobei der geschlossene Umfangsbereich des Drehschiebers (9) größer ist, als der Umfangsbereich, welcher von der Öffnungsfläche im Deckelkörper (1) eingenommen wird, sodass der Drehschieber (9) die Öffnungsfläche des Deckelkörpers (1) vollständig abdecken kann und dabei den Deckelkörper (1) beidseits seiner Öffnungsfläche außen überlappt, wobei der Drehschieber (9) auf der umlaufenden ringförmigen Gleitfläche (10) des Deckelkörpers (1) aufruht und der Normalabstand zwischen der Unterseite der Deckenwand (2) des Deckelkörpers (1) und der Gleitfläche (10) mindestens 5 cm beträgt.

2. Deckel nach Anspruch 1, **dadurch gekennzeichnet, dass** der Ringflansch (6) an seiner unteren Seite eine nach innen und unten verlaufende Zentrierkegelfläche (18) aufweist und innen an die Zentrierkegelfläche (18) anschließend einen von dieser nach unten abstehenden Innensteg (19).

3. Deckel nach einem der Ansprüche 1 bis 2, **dadurch gekennzeichnet, dass** sich die Öffnungsfläche des Deckelkörpers (1) direkt von der ringförmigen Gleitfläche (10) weg erstreckt, und beidseits durch die beiden Enden der Umfangswand (3) begrenzt ist, welche sich von der Gleitfläche (10) weg erheben, wobei der Winkel (α), welcher zwischen den beiden unteren Endpunkten der Öffnungsfläche bezüglich der Rotationsachse (4) des Ringflansches (6) eingeschlossen ist, mindesten 90 Grad beträgt, wobei die Öffnungsfläche durch den Ringflansch (6) von der unteren Öffnung des Deckelkörpers (1) getrennt ist, welche bei bestimmungsgemäßer Verwendung dem Kochgefäß (33) zugewandt liegt.

4. Deckel nach einem der Ansprüche 1 bis 3, **dadurch gekennzeichnet, dass** die Umfangswand (14) und Deckenwand (13) des Drehschiebers (9) senkrecht auf dessen untere Öffnung gesehen einen im wesentlichen kreissegmentförmigen Körper bilden, dessen Segmenthöhe größer ist als dessen Radius.

5. Deckel nach einem der Ansprüche 1 bis 4, **dadurch gekennzeichnet, dass** der Drehschieber (9) zumindest einen Drehschiebergriff (26) aufweist, welcher seitlich radial nach außen von der Umfangswand (14) des Drehschiebers (9) absteht.

6. Deckel nach einem der Ansprüche 1 bis 5, **dadurch gekennzeichnet, dass** der Drehschieber (9) zwei Drehschiebergriffe (26) aufweist, wobei diese seitlich beidseits der Öffnungsfläche des Drehschiebers (9) nach außen von der Umfangswand (14) abstehen.

7. Deckel nach einem der Ansprüche 1 bis 6, **dadurch gekennzeichnet, dass** vom Ringflansch (6) ein Deckelgriff (17) absteht, welcher den Ringflansch (6) in radialer Richtung nach außen überragt.

8. Deckel nach einem der Ansprüche 1 bis 7, **dadurch gekennzeichnet, dass** der den Deckelkörper (1) mit Bewegungsspiel außen umschließende Drehschieber (9) auf einer umlaufenden Gleitfläche (10) des Deckelkörpers (1) aufruht und dass von den beiden durch den Deckelkörper (1) und den Drehschieber (9) gebildeten Deckelteilen einer einen Achsstummel (11) und der andere eine Steckaufnahme (12) für den Achsstummel (11) aufweist.

9. Deckel nach einem der Ansprüche 1 bis 8, **dadurch gekennzeichnet, dass** der Drehschieber (9) und der Deckelkörper (1) über eine selbstverriegelnde Steckverbindung verbunden sind, welche ein senkrechtes Abheben des Drehschiebers (9) vom Deckelkörper (1) in zumindest einer Drehstellung des Drehschiebers (9) am Deckelkörper (1) erlaubt und in zumindest einer zweiten Drehstellung des Drehschiebers (9) am Deckelkörper (1) nicht erlaubt.

10. Deckel nach einem der Ansprüche 1 bis 9, **dadurch gekennzeichnet, dass** eine Deckenwand (2, 13) mit einer Öffnung mit zumindest einem exzentrischen Abschnitt (23) versehen ist und die andere Deckenwand (2, 13) mit einem Verriegelungszapfen (24) versehen ist, welcher als mit der Deckenwand (2, 13) verbundener Achsstummel (11) ausgeführt ist, welcher an seinem von der Deckenwand (2, 13) entfernt liegenden Endbereich mit zumindest einem exzentrischen Abschnitt versehen ist, wobei der Kopf des Verriegelungszapfens (24) senkrecht durch die Öffnung steckbar ist, wenn deren exzentrische Abschnitte einander zugewandt sind.

11. Deckel nach einem der Ansprüche 1 bis 10, **dadurch gekennzeichnet, dass** dieser zudem einen Ringadapter (27) umfasst, welcher als ringförmiger Körper vorliegt, der an seiner unteren Seite eine nach innen und unten verlaufende Zentrierkegelfläche (28) aufweist und innen an die Zentrierkegelfläche (28) anschließend einen von dieser nach unten abstehenden Innensteg (29), wobei der Ringflansch (6) des Deckelkörpers (1) von oben auf den Ringadapter (27) aufsetzbar ist und der Innensteg (29) des Ringadapters (27) einen geringeren Durchmesser aufweist als der Innensteg (19) des Ringflansches (6).

12. Deckel nach einem der Ansprüche 1 bis 11, **dadurch gekennzeichnet, dass** die Breite der Umfangswand (3) kleiner als ihre Höhe ist.

13. Deckel nach einem der Ansprüche 1 bis 12, **dadurch gekennzeichnet, dass** der Normalabstand zwischen der Unterseite der Deckenwand (2) des Deckelkörpers (1) und der Gleitfläche (10) zumindest 7 cm beträgt.

14. Deckel nach einem der Ansprüche 1 bis 13, **dadurch gekennzeichnet, dass** der größte Normalabstand (b) zwischen den beidseits an die Öffnungsfläche des Deckelkörpers (1) anschließenden Enden der Umfangswand (3) zumindest 20 cm bevorzugt zumindest 25 cm beträgt.

15. Deckel nach einem der Ansprüche 1 bis 14, **dadurch gekennzeichnet, dass** die Deckenwand (2) eine ebene Kreisscheibe mit Radius (r) umfasst, welcher von der Öffnungsfläche des Deckelkörpers (1) teilweise geschnitten ist, wobei der Radius (r) zumindest ein Viertel des Innendurchmessers der Umfangswand (3) an ihrem unteren Ende beträgt.

## Claims

1. Lid, comprising a downwardly open lid body (1) and a downwardly open rotary slide (9), the lid body (1) having an annular flange (6) with a circumferential annular sliding surface (10) and starting from the sliding surface (10) a raised, steep peripheral wall (3), which merges into an upper flatter top wall (2), wherein the rotary slide (9) also has a raised, steep peripheral wall (14), which merges into an upper flatter top wall (13) and wherein the rotary slide (9) rests on the outside of the lid body (1),
**characterised in that**
in the lid body (1) and in the rotary slide (9) each have an opening surface which extends over one part each of the peripheral wall (3, 14) and top wall (2, 13) of the respective body (1,9), wherein the opening surfaces extend at their greatest expansion each around a peripheral region of at least 110° and wherein the closed peripheral region of the rotary slide (9) is greater than the peripheral region, which is occupied by the opening surface in the lid body (1), so that the rotary slide (9) can completely cover the opening area of the lid body (1), while overlapping the lid body (1) on its outside on both sides of its opening surface, wherein the rotary slide (9) rests on the circumferential annular sliding surface (10) of the lid body (1) and the perpendicular distance between the underside of the top wall (2) of the lid body (1) and the sliding surface (10) is at least 5 cm.

2. Lid according to claim 1, **characterised in that** the annular flange (6) has on its lower side an inwardly and downwardly extending centring cone area (18) and inside has an inner web (19) attaching to the centring cone area (18) and downwardly projecting therefrom.

3. Lid according to one of the claims 1 to 2, **characterised in that** the opening surface of the lid body (1) extends directly away from the annular sliding surface (10), and is limited on both sides by the two ends of the peripheral wall (3), which rise away from the sliding surface (10), wherein the angle (α), which is enclosed between the two lower end points of the opening surface with respect to the rotation axis (4) of the annular flange (6), is at least 90 degrees, wherein the opening area is separated by the annular flange (6) from the lower opening of the lid body (1), which in normal use, faces the cooking vessel (33).

4. Lid according to one of the claims 1 to 3, **characterised in that** the peripheral wall (14) and top wall (13) of the rotary slide (9), seen perpendicular to its lower opening, form an essentially circular-segmented body, the segment height of which is greater than its radius.

5. Lid according to one of the claims 1 to 4, **characterised in that** the rotary slide (9) has at least one rotary slide handle (26), which laterally projects radially outward from the peripheral wall (14) of the rotary slide (9).

6. Lid according to one of the claims 1 to 5, **characterised in that** the rotary slide (9) has two rotary slide handles (26), whereby these laterally project outward on both sides of the opening surface of the rotary slide (9) from the peripheral wall (14).

7. Lid according to one of the claims 1 to 6, **characterised in that** a lid handle (17) protrudes from the annular flange (6), which projects outwards beyond the annular flange (6) in the radial direction.

8. Lid according to one of the claims 1 to 7, **characterised in that** the rotary slide (9) enclosing the lid body (1) with room to move, rests on a circumferential sliding surface (10) of the lid body (1) and **in that** of both lid parts formed by the lid body (1) and the rotary slide (9), one has an axle stub (11) and the other has a socket (12) for the axle stub (11).

9. Lid according to one of the claims 1 to 8, **characterised in that** the rotary slide (9) and the lid body (1) are connected via a self-locking connector, which allows the vertical lifting of the rotary slide (9) from the lid body (1) in at least one rotational position of the rotary slide (9) on the lid body (1) and does not allow it in at least a second rotational position of the rotary slide (9) on the lid body (1).

10. Lid according to one of the claims 1 to 9, **characterised in that** a top wall (2, 13) has an opening with at least one eccentric section (23) and the other top wall (2, 13) has a locking pin (24), which is designed as an axle stub (11) connected to the top wall (2, 13), which has at least one eccentric section at its end area which is remote from the top wall (2, 13), whereby the head of the locking pin (24) is vertically pluggable through the opening when their eccentric sections face each other.

11. Lid according to one of the claims 1 to 10, **characterised in that** it also comprises a ring adapter (27), which is in the form of an annular body, which has on its lower side an inwardly and downwardly extending centring cone area (28) and inside has an inner web (29) attaching to the centring cone area (28) and downwardly projecting therefrom, wherein the annular flange (6) of the lid body (1) can be set on the ring adapter (27) from above and the inner web (29) of the ring adapter (27) has a smaller diameter than the inner web (19) of the annular flange (6).

12. Lid according to one of the claims 1 to 11, **characterised in that** the width of the peripheral wall (3) is smaller than its height.

13. Lid according to one of the claims 1 to 12, **characterised in that** the perpendicular distance between the underside of the top wall (2) of the lid body (1) and the sliding surface (10) is at least 7 cm.

14. Lid according to one of the claims 1 to 13, **characterised in that** the largest perpendicular distance (b) between the ends of the peripheral wall (3) adjoining both sides of the opening surface of the lid body (1) is at least 20 cm, preferably at least 25 cm.

15. Lid according to one of the claims 1 to 14, **characterised in that** the top wall (2) comprises a flat circular disc with a radius (r), which is partially cut by the opening surface of the lid body (1), wherein the radius (r) is at least a quarter of the inner diameter of the peripheral wall (3) at its lower end.

## Revendications

1. Couvercle comprenant un corps de couvercle (1) ouvert vers le bas et un tiroir rotatif (9) ouvert vers le bas, le corps de couvercle (1) ayant une bride annulaire (6) avec une surface de glissement annulaire circonférentielle (10) et partant de la surface de glissement (10) une paroi périphérique (3) raide, relevée, qui pénètre dans une paroi de couverture supérieure plate (2), le tiroir rotatif (9) ayant également une paroi périphérique (14) raide, relevée, qui pénètre dans une paroi de couverture supérieure plate (13) et le tiroir rotatif (9) reposant sur l'extérieur du corps de couvercle (1),
**caractérisé en ce que**
dans le corps de couvercle (1) et dans le tiroir rotatif (9), chacun a une surface d'ouverture qui s'étend sur une partie de la paroi périphérique (3, 14) et de la paroi de couverture (2, 13) du corps respectif (1, 9), les surfaces d'ouverture s'étendant à leur plus grande étendue, respectivement autour d'une zone périphérique d'au moins 110 ° et la zone périphérique fermée du tiroir rotatif (9) étant supérieure à la zone périphérique occupée par la surface d'ouverture dans le corps de couvercle (1), de sorte que le tiroir rotatif (9) puisse complètement recouvrir la zone d'ouverture du corps de couvercle (1) et superpose alors le corps de couvercle (1) des deux côtés de sa surface d'ouverture à l'extérieur, le tiroir rotatif (9) reposant sur la surface de glissement annulaire circonférentielle (10) du corps de couvercle (1) et la distance normale entre la face inférieure de la paroi de couverture (2) du corps du couvercle (1) et de la surface de glissement (10) étant d'au moins 5 cm.

2. Couvercle selon la revendication 1, **caractérisé en ce que** la bride annulaire (6) présente sur sa face inférieure une surface de cône de centrage (18) s'étendant vers l'intérieur et vers le bas et à l'intérieur de la surface de cône de centrage (18), englobant une traverse intérieure (19) faisant saillie vers le bas à partir de celle-ci.

3. Couvercle selon l'une des revendications 1 à 2, **caractérisé en ce que** la surface d'ouverture du corps de couvercle (1) s'étend directement à partir de la surface de glissement annulaire (10), et est limitée des deux côtés par les deux extrémités de la paroi périphérique (3), qui s'élève loin de la surface coulissante (10), l'angle (α), qui est compris entre les deux points d'extrémité inférieurs de la surface d'ouverture par rapport à l'axe de rotation (4) de la bride annulaire (6), étant d'au moins 90 degrés, la zone d'ouverture passant à travers la bride annulaire (6) étant séparée de l'ouverture inférieure du corps de couvercle (1), qui, lorsqu'il est utilisé comme prévu, fait face au récipient de cuisson (33).

4. Couvercle selon l'une des revendications 1 à 3, **caractérisé en ce que** la paroi périphérique (14) et la paroi de couverture (13) du tiroir rotatif (9) vu perpendiculairement à son ouverture inférieure forment un corps essentiellement en forme de segment circulaire dont la hauteur de segment est supérieure à son rayon.

5. Couvercle selon l'une des revendications 1 à 4, **caractérisé en ce que** le tiroir rotatif (9) présente au moins une poignée de tiroir rotatif (26) qui fait saillie latéralement, radialement vers l'extérieur depuis la paroi périphérique (14) du tiroir rotatif (9).

6. Couvercle selon l'une des revendications 1 à 5, **caractérisé en ce que** le tiroir rotatif (9) présente au moins deux poignées de tiroir rotatif (26) qui font saillie latéralement des deux côtés de la surface d'ouverture du tiroir rotatif (9) vers l'extérieur depuis la paroi périphérique (14).

7. Couvercle selon l'une des revendications 1 à 6, **caractérisé en ce qu'**une poignée de couvercle (17) fait saillie de la bride annulaire (6), qui dépasse la bride annulaire (6) dans la direction radiale vers l'extérieur.

8. Couvercle selon l'une des revendications 1 à 7, **caractérisé en ce que** le tiroir rotatif (9) entourant extérieurement le corps du couvercle (1) avec un jeu de mouvement repose sur une surface de glissement circonférentielle (10) du corps du couvercle (1) et qu'il présente par les deux pièces de couvercle, formées par le corps de couvercle (1) et le tiroir rotatif (9), d'un côté un tourillon (11) et de l'autre un logement d'emboîtement (12) pour le tourillon (11).

9. Couvercle selon l'une des revendications 1 à 8, **caractérisé en ce que** le tiroir rotatif (9) et le corps de couvercle (1) sont reliés par un connecteur autobloquant, lequel permet de soulever verticalement le tiroir rotatif (9) du corps de couvercle (1) dans au moins une position de pivotement du tiroir rotatif (9) au niveau du corps du couvercle (1) et ne permet pas dans au moins une deuxième position de pivotement du tiroir rotatif (9) au niveau du corps du couvercle (1).

10. Couvercle selon l'une des revendications 1 à 9, **caractérisé en ce qu'**une paroi de couverture (2, 13) est équipée d'une ouverture avec au moins une partie excentrée (23) et que l'autre paroi de couverture (2, 13) est équipée d'un boulon de verrouillage (24), qui est conçu comme un tourillon (11) relié à la paroi de couverture (2, 13), qui comporte au moins une partie excentrique dans son extrémité opposée à la paroi de couverture (2, 13), la tête du boulon de verrouillage (24) étant enfichable verticalement par l'ouverture, lorsque les parties excentriques se font face.

11. Couvercle selon l'une des revendications 1 à 10, **caractérisé en ce qu'**il comprend en outre un adaptateur annulaire (27) se présentant sous la forme d'un corps annulaire présentant sur sa face inférieure une surface de cône de centrage (28) s'étendant vers l'intérieur et vers le bas et à l'intérieur de la surface de cône de centrage (28) englobant une traverse intérieure (29) faisant saillie vers le bas à partir de celle-ci, la bride annulaire (6) du corps de couvercle (1) vue du dessus pouvant être placée sur l'adaptateur annulaire (27) et la traverse intérieure (29) de l'adaptateur annulaire (27) ayant un diamètre plus petit que la traverse intérieure (19) de la bride annulaire (6).

12. Couvercle selon l'une des revendications 1 à 11, **caractérisé en ce que** la largeur de la paroi périphérique (3) est inférieure à sa hauteur.

13. Couvercle selon l'une des revendications 1 à 12, **caractérisé en ce que** la distance normale entre la face inférieure de la paroi de couverture (2) du corps de couvercle (1) et la surface de glissement (10) est d'au moins 7 cm.

14. Couvercle selon l'une des revendications 1 à 13, **caractérisé en ce que** la plus grande distance normale (b) entre les extrémités adjacentes des deux côtés au niveau de la surface d'ouverture du corps de couvercle (1) de la paroi périphérique (3) est d'au moins 20 cm, de préférence d'au moins 25 cm.

15. Couvercle selon l'une des revendications 1 à 14, **caractérisé en ce que** la paroi de couverture (2) comprend un disque circulaire plat de rayon (r) partiellement coupé par la surface d'ouverture du corps de couvercle (1), le rayon (r) étant au moins un quart du diamètre intérieur de la paroi périphérique (3) au niveau de son extrémité inférieure.
